(19)

Europäisches
Patentamt
European
Patent Office
Office européen
des brevets

(11)  **EP 4 198 928 A1**

(12)  **EUROPEAN PATENT APPLICATION**

(43) Date of publication:
**21.06.2023  Bulletin 2023/25**

(21) Application number: **21306772.1**

(22) Date of filing: **14.12.2021**

(51) International Patent Classification (IPC):
**G06V 40/70** (2022.01)    **G06V 10/82** (2022.01)
**G06V 40/16** (2022.01)

(52) Cooperative Patent Classification (CPC):
**G06V 40/70; G06V 10/82; G06V 40/172**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Thales Dis France SAS**
**92190 Meudon (FR)**
• **THALES**
**92400 Courbevoie (FR)**
• **Board of Trustees of Michigan State University**
**East Lansing, MI 48824 (US)**
• **INRIA - Institut National de Recherche en Informatique et en Automatique**
**78150 Le Chesnay (FR)**

(72) Inventors:
• **ANGHELONE, David**
**74300 CLUSES (FR)**
• **FAURE, Philippe**
**92190 MEUDON (FR)**
• **CHEN, Cunjian**
**EAST LANSING, 48824 (US)**
• **ROSS, Arun**
**EAST LANSING, 48824 (US)**
• **DANTCHEVA, Antitza**
**06902 SOPHIA ANTIPOLIS CEDEX (FR)**

(74) Representative: **Atout PI Laplace Immeuble "Visium" 22, avenue Aristide Briand 94117 Arcueil Cedex (FR)**

(54)  **CROSS-SPECTRAL FACE RECOGNITION TRAINING AND CROSS-SPECTRAL FACE RECOGNITION METHOD**

(57)    A cross-spectral face recognition learning method according to the invention is based on a set of associated face images, a thermal image (10T) and a visual image (10V), of a plurality of persons. The thermal image (10T) is coded in two different ways. A style encoder (200T) provides a style code (420T) of the thermal image (10T). An identity encoder (100T) provides an identity code (410T) of the thermal image (10T). The visual image 10V is coded in a similar way with a style encoder (200V) providing a style code (420V) and with an identity encoder (100V) providing an identity code (410V). The two face images of the same person share in the identity features a common part in the respective identity codes (410T and 410V), noted as common identity code (410VT), whereas the style codes (420T and 420V) for the two images comprise features only relevant two the specific style, i.e. either thermal or visual, of the image.

FIG. 2

EP 4 198 928 A1

**Description**

TECHNICAL FIELD

The present invention relates to a cross-spectral face recognition training method as well as a cross-spectral face recognition method based on a trained image set.

PRIOR ART

A cross-spectral face recognition method is disclosed in Zhang et al. "Tv-gan: Generative adversarial network based thermal to visible face recognition". In International Conference on Biometrics, pages 174-181, 2018. Other publications are Chen et al. "Matching thermal to visible face images using a semantic-guided generative adversarial network" in IEEE International Conference on Automatic Face & Gesture Recognition, pages 1-8, 2019, Di et al. "Multi-scale thermal to visible face verification via attribute guided synthesis" in IEEE Transactions on Biometrics, Behavior, and Identity Science, 3(2):266-280, 2021, Wang et al. "Thermal to visible facial image translation using generative adversarial networks" in IEEE Signal Processing Letters, 25(8):1161-1165, 2018, Iranmanesh et al. "Coupled generative adversarial network for heterogeneous face recognition" in Image and Vision Computing, 94:103861, 2020, Kezebou et al. "TR-GAN:thermal to RGB face synthesis with generative adversarial network for crossmodal face recognition" in Mobile Multimedia/Image Processing, Security, and Applications, volume 11399, pages 158-168, 2020, Di et al. "Polarimetric thermal to visible face verification via self-attention guided synthesis" in International Conference on Biometrics, pages 1-8, 2019.

Cross-spectral face recognition is more challenging than traditional FR for both human examiners as well as computer vision algorithms, due to following three limitations. Firstly, there can be large intra-spectral variation, where within the same spectrum, face samples of the same subject may exhibit larger variations in appearance than face samples of different subjects. Secondly, the appearance variation between two face samples of the same subject in different spectral bands can be larger than that of two samples belonging to two different subjects, referred to as modality gap. Finally, limited availability of training samples of cross-modality face image pairs can significantly impede learning-based schemes, including those based on deep learning models. Thermal sensors have been widely deployed in nighttime and low-light environments for security and surveillance applications. Some of them capture face images beyond the visible spectrum. However, there is considerable performance degradation when a direct matching is performed between thermal (THM) face images and visible (VIS) face images (due to the modality gap). This is mainly due to the change in identity determining features across the thermal and visible domains.

SUMMARY OF THE INVENTION

One of the main challenges in performing thermal-to-visible face recognition (FR) is preserving the identity across different spectral bands. In particular, there is considerable performance degradation when a direct matching is performed between thermal (THM) face images and visible (VIS) face images. This is mainly due to the change in identity determining features across the thermal and visible domains.

Based on the prior art it is an object of the invention to provide a CFR method overcoming the cited problems. This is achieved for a CFR training method with the features of claim 1. A cross-spectral recognition method within a visual image database is disclosed in claim 2. For completeness, a cross-spectral recognition method within a thermal image database is disclosed in claim 3.

The present invention is based on the insight that a supervised learning framework that addresses Cross-spectral Face Recognition (CFR), i.e: Thermal-to-Visible Face Recognition can be improved, if the encoded features are disentangled between style features solely related to the spectral domain of the image and identity features which are present in both spectral versions of the image.

The present invention minimizes the spectral difference by synthesizing realistic visible faces from their thermal counterparts. In particular, it translates facial images from one spectrum to another, while preserving explicitly the identity or in other words, it disentangle the identity from other confounding factors, and as a result the true appearance of the face is now preserved during the spectral translation. In this context an input image is explicitly decomposed into an identity code that is spectral-invariant and a style code that is spectral-dependent.

To enable thermal-to-visible translation and vice versa, the method according to the invention incorporates three networks per spectrum, (i) identity encoder, (ii) style encoder and (iii) decoder. To translate an image from a source spectrum to a target spectrum, the identity code is combined with a style code denoting the target domain. By using such disentanglement, the identity during the spectral translation is preserved as well as the identity preservation is analyzed by interpreting and visualizing the identity code.

As mentioned above the method proposes a supervised learning framework for CFR that translates facial images from one spectrum to another, while preserving the explicitly the identity. This is done with the concept of introducing a latent space with identity and style codes. X. Huang et al. have published in "Multimodal unsupervised image-to-image translation" in European Conference on Computer Vision, 2018 a method for the latent space decomposition in a context not similar to the issues raised in the connection with the problem of CFR.

Face recognition beyond the visible spectrum allows for increased robustness in the presence of different poses, illumination variations, noise, as well as occlusions. Further benefits include incorporating the absolute size of objects, as well as robustness to presentation attacks such as makeup and masks. Therefore, comparing RGB face images against those acquired beyond the visible spectrum is of particular pertinence in designing Face Recognition (FR) systems for defense, surveillance, and public safety and is referred to as Cross-spectral Face Recognition (CFR).

Four loss functions have been introduced in order to enhance both image as well as latent reconstructions.

The latent space has been analyzed and decomposed into a shared identity space and a spectrum dependent style space, by visualizing the encoding using heatmaps.

The method has been evaluated on two benchmark multispectral face datasets and achieve improved results with respect to visual quality, as well as face recognition matching scores.

Further embodiments of the invention are laid down in the dependent claims.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1    shows an overview flowchart of the invention;
Fig. 2    shows the main components of the learning method according to the invention;
Fig. 3    shows a flowchart depicting the training of the method according to an embodiment of the invention;
Fig. 4    shows the auto-encoder architecture used as an entity and in separated parts in the method as will be described in connection with Fig. 3;
Fig. 5    shows three examples of visual and thermal images and the common identity features;
Fig. 6    shows the application of the method according to the invention in face recognition;
Fig. 7    shows a ROC curve pertaining to different loss functions for the ARL-MMFD dataset; and
Fig. 8    shows a ROC curve pertaining to different loss functions for the ARL-VTF dataset.

DESCRIPTION OF PREFERRED EMBODIMENTS

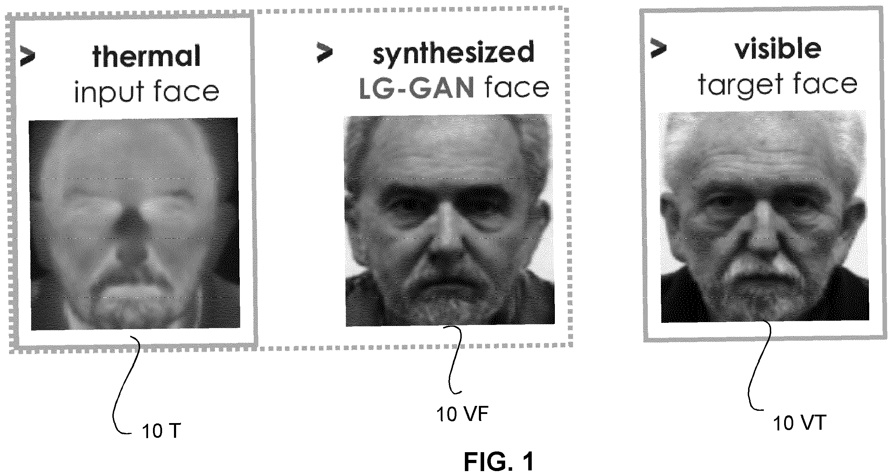

Fig. 1 shows an overview flowchart of the invention. A detected thermal image 10T is the input for the present CFR. An synthesized visual image 10VF is created and this image is looked for in the target database of visual images and the visual target face image 10VT is found in the target database.

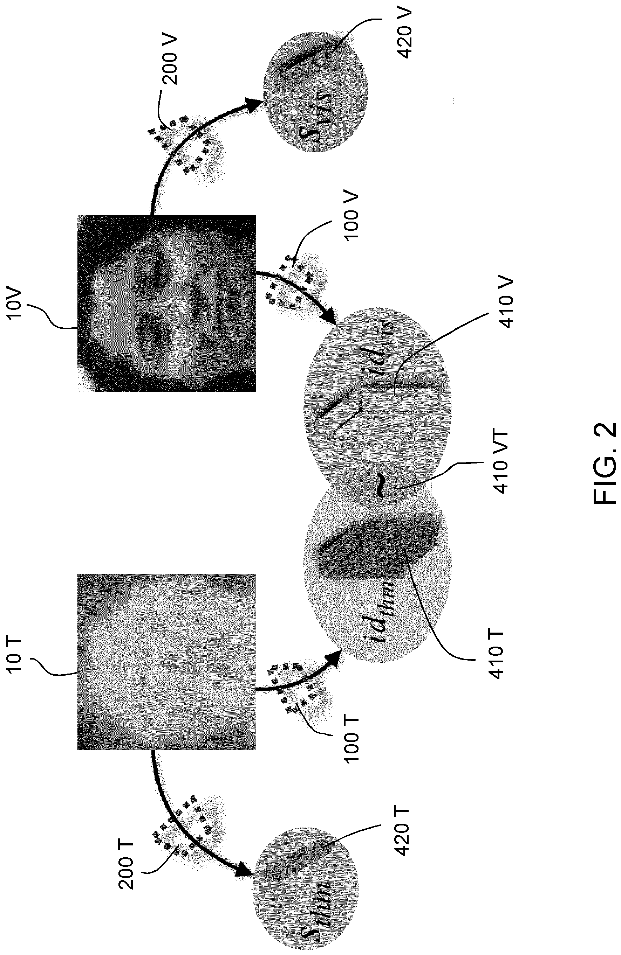

The following description in connection with Fig. 2 to 4 will explain the features relating to the generator for each domain which comprises of three networks, viz., Identity-Encoder, Style-Encoder and Decoder, targeted to extract a domain-shared identity latent code and a spectrum-specific style latent code. The translated image is reconstructed by combining the identity code with the style code of the target spectrum. As a result, Fig. 1 shows said synthetized visible image 10VF generated by the method.

Fig. 2 shows the main components of the learning method according to the invention. The learning method is based on a set of associated face images, a thermal image 10T and a visual image 10V, of the same person.

The thermal image 10T is coded in two different ways. A style encoder 200T provides a style code 420T of the thermal image 10T, also denoted $s_{thm}$. An identity encoder 100T provides an identity code 410T of the thermal image 10T, also denoted $id_{thm}$.

The visual image 10V is also coded in two different ways, based on the same principles. A style encoder 200V provides a style code 420V of the visual image 10V, also denoted $s_{vis}$. An identity encoder 100V provides an identity code 410V of the visual image 10V, also denoted $id_{vis}$.

The two face images of the same person share in identity features a common part in the respective identity codes 410T and 410V which is noted in Fig. 2 as common identity code 410VT, whereas the style codes 420T and 420V for the two images comprise features only relevant two the specific style, i.e. either thermal or visual, of the image.

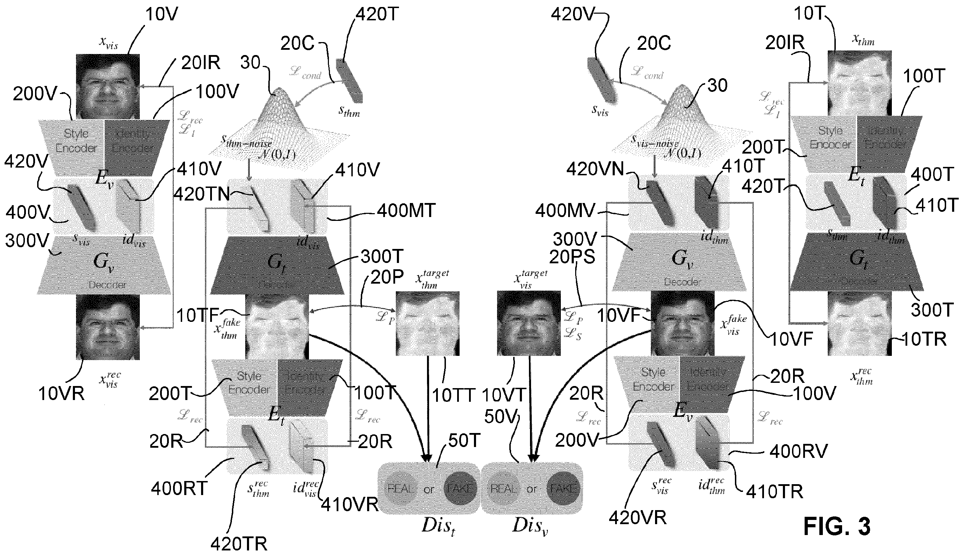

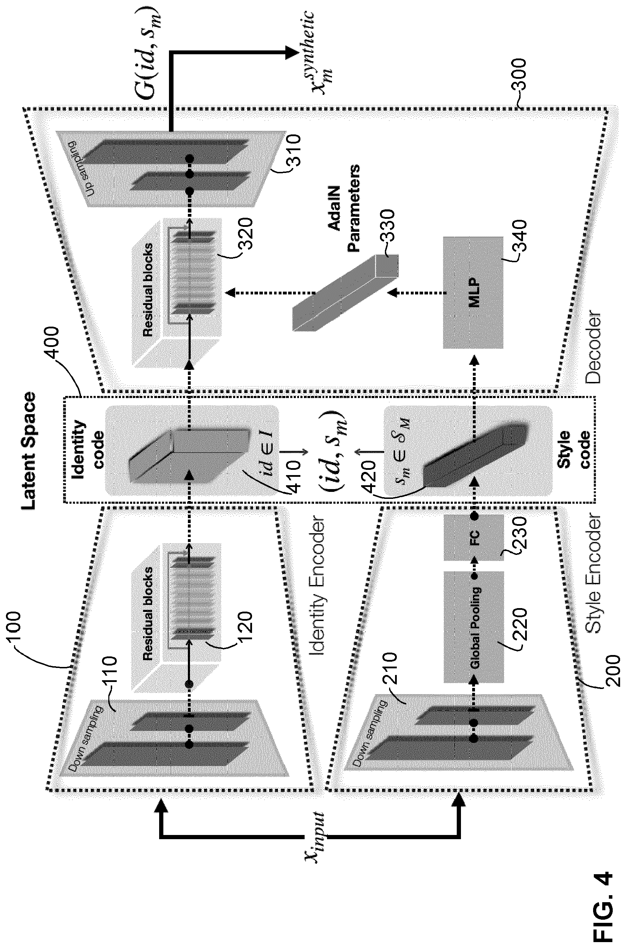

Fig. 3 shows a flowchart depicting the training of the method according to an embodiment of the invention. Fig. 4 illustrates the auto-encoder architecture used as an entity and in separated parts in the method as will be described in connection with Fig. 3.

On the left side, the handling of the visual image 10V of such a pair of visual/thermal training images is shown. The visual image 10V, also denoted $x_{vis}$, is style encoded in style encoder 200V and identity encoded in identity encoder 100V, which is also shown as $E_v$, generating the visual style code 420V and visual identity code 410V, respectively, which build the visual latent space 400V. These codes are then decoded in the visual decoder 300V, which is also shown as $G_v$, generating the recreated visual image 10VR, also shown as $x_{vis}^{rec}$. The learning instance is shown by the arrow connection between the two images 10V and 10VR, provided as a loss function 20IR, comprising in fact a loss function part $L_{rec}$ and a function part $L_I$. The loss functions parts are related to the identity and the recreation of the visual image.

On the right side of Fig. 3, the handling of the thermal image 10T of such a pair of visual/thermal training images is shown. The thermal image 10T, also denoted $x_{thm}$, is style encoded in style encoder 200T and identity encoded in identity encoder 100T, which is also shown as $E_t$, generating the thermal code 420V and thermal code 410V, respectively, which build the thermal latent space 400T. These codes are then decoded in the thermal 300V, which is also shown as $G_t$, generating the recreated thermal image 10TR, also shown as $x_{thm}^{rec}$. The learning instance is shown by the arrow connection between the two images 10T and 10TR, provided as a loss function 20IR, comprising in fact a loss function part $L_{rec}$ and a function part $L_I$. The loss functions parts are related to the identity and the recreation of the thermal image.

Beside these learning steps, solely conducted in the separated thermal and visual image sets with the possible interaction of the loss function, especially in view of the main part of the supervised learning method, the entanglement of thermal and visual images and their reconstruction which is shown with the two middle parts of Fig. 3.

On the left side of the middle of Fig. 3, the generation of a simulated or fake thermal image 10TF is shown, also denoted as $x_{thm}^{fake}$. For this, the visual identity code 410V is combined in a mixed thermal image latent space 400MT with a specific style code, based on the addition of the thermal style code 420T with a noise 30, also denoted $N(0,1)$, creating a thermal noisy style code 420TN. This combination is also learning via the loss function 20C, also $L_{cond}$. These two parts of the mixed thermal image latent space 400MT are fed to the thermal decoder 300T, also shown as $G_t$, creating said simulated thermal image 10TF. This image 10TF is then encoded with the thermal identity encoder 100T and the thermal style encoder 200T, also shown as $E_t$, and thus creating separately a recreated thermal style code 420TR, also $s_{thm}^{rec}$, as well as a recreated visual identity code 410VR, $id_{vis}^{rec}$, forming the recreated thermal latent space 400RT. Both recreated codes 420TR and 410VR are connected with their above mentioned input counter parts 420TN and 410V, respectively, via a loss function 20R, also shown as $L_{rec}$.

This simulated thermal image 10TF is fed together with a target thermal image 10TT, $x_{thm}^{target}$, to a thermal discriminator 50T, also $Dis_t$, to recognize the simulated thermal image 10TF as real or fake, i.e. a binary decision. The target thermal image 10TT can be the original thermal image 10T. The learning process is improved through the target thermal image 10TT being connected with the simulated thermal image 10TF via the loss function 20P, also mentioned as $L_P$.

On the right side of the middle of Fig. 3, the generation of a simulated or fake visual image 10VF is shown, also denoted as $x_{vis}^{fake}$. For this, the thermal identity code 410T is combined in a mixed visual image latent space 400MV with a specific style code, based on the addition of the visual style code 420V with a noise 30, also denoted $N(0,1)$, creating a visual noisy style code 420VN. This combination is also learning via the loss function 20C, also $L_{cond}$. These two parts of the mixed visual image latent space 400MV are fed to the visual decoder 300V, also shown as $G_v$, creating said simulated visual image 10VF. This image 10VF is then encoded with the visual identity encoder 100V and the visual style encoder 200T, also shown as $E_v$, and thus creating separately a recreated visual style code 420VR, also $s_{vis}^{rec}$, as well as a recreated thermal identity code 410TR, $id_{thm}^{rec}$, forming the recreated visual latent space 400VT. Both recreated codes 420VR and 410TR are connected with their above mentioned input counter parts 420VN and 410T, respectively, via a loss function 20R, also shown as $L_{rec}$.

This simulated visual image 10VF is fed together with a target visual image 10VT, $x_{vis}^{target}$, to a visual discriminator 50V, also $Dis_t$, to recognize the simulated visual image 10VF as real or fake, i.e. a binary decision. The target visual image 10VT can be the original visual image 10V. The learning process is improved through the target visual image 10VT being connected with the simulated visual image 10VF via the loss function 20P, also mentioned as $L_P$.

Fig. 4 shows the auto-encoder architecture used as an entity and in separated parts in the method as described above in connection with Fig. 3. The generator comprises three networks for each domain, viz., Identity-Encoder, Style-Encoder and Decoder, targeted to extract a domain-shared identity latent code and a spectrum-specific style latent code. The translated image is reconstructed by combining the identity code with the style code of the target spectrum. Fig. 4 illustrates the auto-encoder architecture. In the discriminator, a multi-scale discriminator is adopted which enables generation of realistic images with refined details.

The input is mentioned as $x_{input}$, being an image handled separately in identity encoder 100 and style encoder 200. The identity encoder 100 uses a downsampler 110 to be applied as well as a residual block unit 120, generating the identity code 410 as part of the latent space 400. Identity code 410 is part of a set. On the other hand, the entry data is downsampled in 210 of the style encoder 200 and subsequently used as input for the global average pooling layer 220, followed by a last fully connected layer or FC 230 generating the style code 420 as part of the latent space 400.

On the other side, the decoder 300 uses the style code 420 in a MLP 340 which is followed by a AdaIN parameter storage 330. This result together with the identity code 410 is fed to the residual block unit 320 which generates after upscaling 310 the simulated or synthetic image, which is also mentioned as fake image.

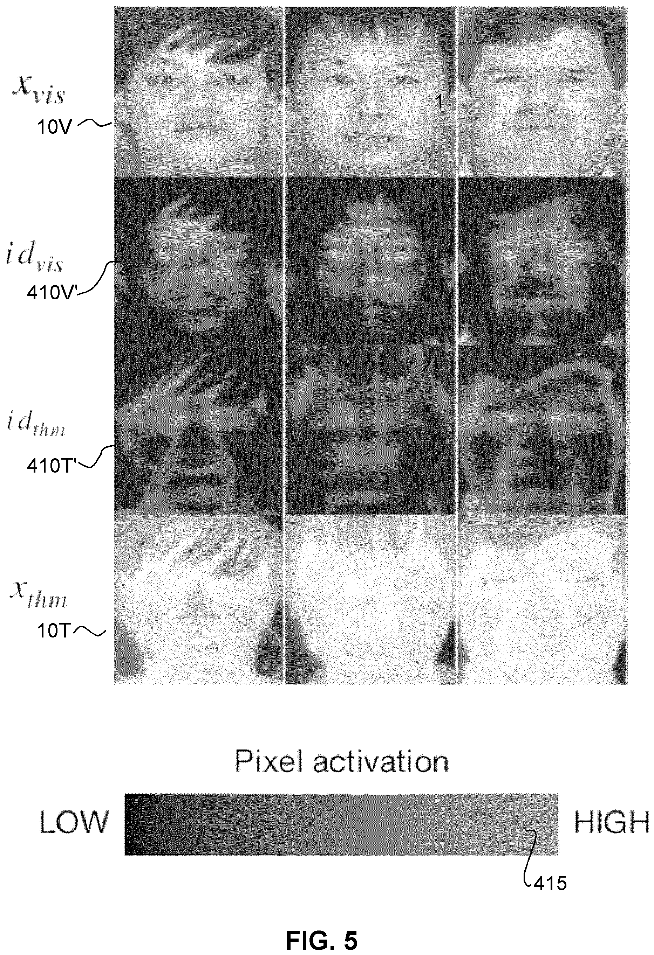

Fig. 5 shows three examples of visual and thermal images and the common identity features. The top row shows three visual images 10V, also denoted $x_{vis}$. The bottom row shows thermal images 10T of the same three persons, also denoted $x_{thm}$. In between, the upper row shows the visual identity code of the image 410V' or $id_{vis}$. The lower row shows the visual thermal code of the image 410T' or $id_{thm}$. The legend under the three images shows a pixel activation bar 415, where from the left to the right, the pixel activation is higher, i.e. the value and impact of the features is greater. It was acknowledged by the inventors and can be seen in Fig. 5, that identity features are preserved between the two cross-spectral images.

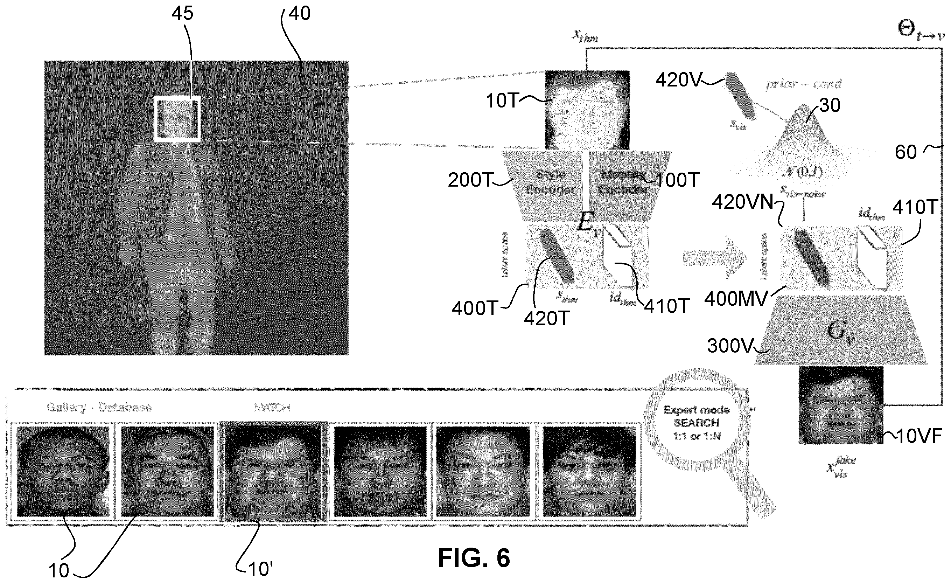

Fig. 6 shows the application of the method according to the invention in cross-spectral face recognition CFR. An image 40 is used as starting point. The image 40 comprises a person, wherein the frame 45 materalizes an extraction result, i.e. a cropped image of the thermal face of the person of interest which serves as thermal image 10T. The thermal image 10T is then encoded with style encoder 200T and identity encoder 100T generating the latent space 400T elements thermal style code 420T and thermal identity code 410T. Based on the knowledge of the visual style code 420V which is combined with noise 30, this visual noisy style code 420VN is used together with the thermal identity code 410T from the so created mixed latent space 400MV as entry values for the visual encoder 300V generating the simulated visual image 10VF. The created simulated visual image 10VF is then compared against a database of images 10, wherein image 10' is showing a visual image of the person of interest and provides a match.

The reference numerals are associated to scientific denominations. The following specification part is related to the development of the scientific denominations.

Let $\mathcal{V}$ and $\mathcal{T}$ be the visible and thermal domains. Let $x_{vis} \in \mathcal{V}$ and $x_{thm} \in \mathcal{T}$ be drawn from the marginal distributions $x_{vis} \sim p_{\mathcal{V}}$ and $x_{thm} \sim p_{\mathcal{T}}$, respectively. Thermal-to-visible face recognition based on (Generative adversarial networks) GAN-synthesis aims to estimate the conditional distribution $p_{\mathcal{V}|\mathcal{T}}\left(x_{vis}|x_{thm}\right)$, where

$$p_{\mathcal{V}|\mathcal{T}}\left(x_{vis}|x_{thm}\right) = \frac{p_{\mathcal{V},\mathcal{T}}\left(x_{vis}, x_{thm}\right)}{p_{\mathcal{T}}\left(x_{thm}\right)} \qquad (1)$$

involves the joint distribution $p_{\mathcal{V},\mathcal{T}}\left(x_{vis}, x_{thm}\right)$. As the joint distribution is not known, we adopt the assumption of "partially shared latent space" from the above mentioned MUNIT publication as follows.

A pair $\left(x_{vis}, x_{thm}\right) \sim p_{\mathcal{V},\mathcal{T}}$ of images, corresponding to the same face from the joint distribution, can be generated through the support of

(a) the identity latent code $id \in \mathcal{I}$, which is shared by both domains (which is introduced by the notation $id_{vis}, id_{thm} \in \mathcal{I}$ for better domain-identity formalization),

(b) the style latent code $s_m \in \mathcal{S}_{\mathcal{M}}$, where $(m, \mathcal{M}) \in \{(vis, \mathcal{V}), (thm, \mathcal{T})\}$, which is specific to the individual domain.

Hence, the joint distribution is approximated via the latent space of the following two phases.

*Within-domain reconstruction phase*

Firstly, the identity latent code and style latent code are extracted from the input images $x_{vis}$ and $x_{thm}$

$$E_{\mathcal{V}}(x_{vis}) = (id_{vis}, s_{vis}) \text{ and } E_{\mathcal{T}}(x_{thm}) = (id_{thm}, s_{thm}) \qquad (2).$$

Then, given the embedding of Equation (2), the face is reconstructed via the generator,

$$G_{\mathcal{V}}(id_{vis}, s_{vis}) = x_{vis}^{rec} \quad \text{and} \quad G_{\mathcal{T}}(id_{thm}, s_{thm}) = x_{thm}^{rec}, \qquad (3)$$

in order to learn the latent space for the specific face. Here, $\mathcal{M} \in \{\mathcal{V}, \mathcal{T}\}$ represents the domain, $E_{\mathcal{M}}$ denotes the factorized identity code and style code auto-encoder, $G_{\mathcal{M}}$ is the underlying decoder, and $x_{vis}^{rec}$ and $x_{thm}^{rec}$ are the corresponding reconstructed images.

The objective of the present method is to learn the global image reconstruction mapping for a fixed $m \in \{vis, thm\}$, i.e.,

$$x_m \rightarrow x_m^{rec} \qquad (4)$$

while preserving facial identity features and allowing for a non-identity shift through latent reconstruction between

$$id_m \rightarrow id_m^{rec} \text{ and } s_m \rightarrow s_m^{rec} \qquad (5)$$

and forcing

$$s_{m-noise} \rightarrow s_m \qquad (6)$$

where, $(id_m^{rec}, s_m^{rec})$ are part of the extraction $(E_{\bar{\mathcal{M}}}(G_{\bar{\mathcal{M}}}(id_m, s_{\bar{m}-noise})), E_{\mathcal{M}}(G_{\mathcal{M}}(id_{\bar{m}}, s_{m-noise})))$, respectively, and $s_{m-noise}$ is randomly drawn from a prior normal distribution in order to learn the associated style distribution. $\bar{\mathcal{M}}$ and $\bar{m}$ represent opposite domains.

*Cross-domain translation phase*

In the domain translation phase, image-to-image translation is performed by swapping the encoder-modality (i.e., spectrum) with the opposite modality of the input image and imposing an explicit supervision on the style domain transfer functions $E_{\mathcal{V}}(x_{thm}) = (id_{thm}, s_{vis-noise})$ and $E_{\mathcal{T}}(x_{vis}) = (id_{vis}, s_{thm-noise})$, and then using $G_{\mathcal{V}}(id_{thm}, s_{vis-noise})$ and $G_{\mathcal{T}}(id_{vis}, s_{thm-noise})$ to produce the final output image in the target spectrum. This is formalized as follows.

$$\Theta_{t \rightarrow v} : \mathcal{T} \rightarrow \mathcal{V}$$
$$x_{thm} \mapsto x_{vis}^{fake} = G_{\mathcal{V}}(E_{\mathcal{V}}(x_{thm})), \qquad (7)$$

$$\Theta_{v \to t} : \quad \mathcal{V} \quad \to \quad \mathcal{T}$$
$$x_{vis} \quad \mapsto \quad x_{thm}^{fake} = G_{\mathcal{T}}(E_{\mathcal{T}}(x_{vis})) \tag{8}$$

Consequently, $\Theta_{t \to v}$ and $\Theta_{v \to t}$ are the functions that synthesize the corresponding visible ($t \to v$) and thermal ($v \to t$) faces. Finally, the present method learns the spectral conditional distribution $p_{\mathcal{V}|\mathcal{T}}\left(x_{vis}^{fake}|x_{thm}\right)$ and $p_{\mathcal{T}|\mathcal{V}}\left(x_{thm}^{fake}|x_{vis}\right)$ through a guided latent generation, where both these conditional distributions overcome the fact that we do not have access to the joint distribution $p_{\mathcal{V},\mathcal{T}}\left(x_{vis}, x_{thm}\right)$. Indeed, the method is able to generate, as an alternative, the joint distributions $p_{\mathcal{V},\mathcal{T}}\left(x_{vis}^{rec}, x_{thm}^{fake}\right)$ and $p_{\mathcal{V},\mathcal{T}}\left(x_{vis}^{fake}, x_{thm}^{rec}\right)$, respectively. The translation is learned using neural networks, and the method as applied and shown in Fig. 6 is focused on Equation (7), where thermal face images are translated into realistic synthetic visible face images. However, the invention can be equally applied to the problem of translated visible face images into realistic synthetic thermal face images based on Equation (8).

The following paragraphs are related to the loss functions as explained in the framework of the invention.

He present method is trained with the help of objective functions that include adversarial and bi-directional reconstruction loss as well as conditional, perceptual, identity, and semantic loss. Bi-directional refers to the reconstruction learning process between *image → latent → image* and *latent → image → latent* by the sub-network (a) and (b), respectively, depicted in Fig. 3. The impact of each loss is investigated with respect to visual results and then propose an efficient combination. Further, an architecture as O.M. Parkhi, A- Vedaldi, and A.Zisserman have published as "Deep face recognition", 2015, which, when trained on a specific dataset, could be used to extract relevant features prior to applying the loss functions.

1) Adversarial Loss: Images generated during the translated phase through Equations (7) and (8) must be realistic and not distinguishable from real images in the target domain. Therefore, the objective of the generators, $\Theta$, is to maximize the probability of the discriminator Dis making incorrect decisions. The objective of the discriminator Dis, on the other hand, is to maximize the probability of making a correct decision, i.e., to effectively distinguish between real and fake (synthesized) images.

$$\mathcal{L}_{GAN}^{t \to v} = \mathbb{E}_{x_{vis} \sim p_{\mathcal{V}}}[log(\mathbf{Dis}_{\mathcal{V}}(x_{vis}))] +$$
$$\mathbb{E}_{x_{thm} \sim p_{\mathcal{T}}}[log(1 - \mathbf{Dis}_{\mathcal{V}}(\Theta_{t \to v}(x_{thm})))]$$

$$\mathcal{L}_{GAN}^{v \to t} = \mathbb{E}_{x_{thm} \sim p_{\mathcal{T}}}[log(\mathbf{Dis}_{\mathcal{T}}(x_{thm}))] +$$
$$\mathbb{E}_{x_{vis} \sim p_{\mathcal{V}}}[log(1 - \mathbf{Dis}_{\mathcal{T}}(\Theta_{v \to t}(x_{vis})))]$$

The adversarial loss is denoted as follows.

$$\mathcal{L}_{GAN} = \mathcal{L}_{GAN}^{t \to v} + \mathcal{L}_{GAN}^{v \to t} \tag{9}$$

2) Bi-directional Reconstruction Loss: Loss functions in the Encoder-Decoder network encourage the domain reconstruction with regards to both the image reconstruction and latent space (identity+style) reconstruction.

$$\mathcal{L}_{rec}^{image} = \underset{x_m^{rec};x_m \sim P_{\mathcal{M}}}{\mathbb{E}}\left[\|x_{vis}^{rec} - x_{vis}\|_1 + \|x_{thm}^{rec} - x_{thm}\|_1\right] \tag{10}$$

$$\mathcal{L}_{rec}^{identity} = \underset{id_m^{rec};id_m \sim P_{\mathcal{M}}}{\mathbb{E}}\left[\|id_{vis}^{rec} - id_{vis}\|_1 + \|id_{thm}^{rec} - id_{thm}\|_1\right], \tag{11}$$

$$\mathcal{L}_{rec}^{style} = \underset{s_m^{rec};s_m \sim \mathcal{N}}{\mathbb{E}}\left[\|s_{vis}^{rec} - s_{vis}\|_1 + \|s_{thm}^{rec} - s_{thm}\|_1\right]. \tag{12}$$

The bi-directional reconstruction loss function is computed as follows:

$$\mathcal{L}_{rec} = \mathcal{L}_{rec}^{image} + \mathcal{L}_{rec}^{identity} + \mathcal{L}_{rec}^{style}. \tag{13}$$

3) Conditional Loss: Imposing a condition on the spectral distribution provides an improvement and is a major difference from the baseline model. Indeed, this allows for a translation that is conditioned to the distribution of the target style code and, further, adds an explicit supervision on the final mapping $\Theta_{t \rightarrow v}$ and $\Theta_{v \rightarrow t}$. The conditional loss $\mathcal{L}_{cond}$ is defined as follows.

$$\begin{aligned}\mathcal{L}_{cond} = &\underset{s_{vis-noise};s_{vis} \sim \mathcal{N}}{\mathbb{E}}\|s_{vis-noise} - s_{vis}\|_1 \\ &+ \underset{s_{thm-noise};s_{thm} \sim \mathcal{N}}{\mathbb{E}}\|s_{thm-noise} - s_{thm}\|_1.\end{aligned} \tag{14}$$

To improve the quality of the synthesized images and render them more realistic, three additional objective functions can be incorporated.

4) Perceptual Loss: The perceptual loss $\mathcal{L}_P$ affects the perceptive rendering of the image by measuring the high level semantic difference between synthesized and target face images. It reduces artefacts and enables the reproduction of realistic details. $\mathcal{L}_P$ is defined as follows:

$$\begin{aligned}\mathcal{L}_P = &\underset{x_{vis}^{fake};x_{vis} \sim P_{\mathcal{V}}}{\mathbb{E}}\|\phi_P(x_{vis}^{fake}) - \phi_P(x_{vis})\|_1 \\ &+ \underset{x_{thm}^{fake};x_{thm} \sim P_{\mathcal{T}}}{\mathbb{E}}\|\phi_P(x_{thm}^{fake}) - \phi_P(x_{thm})\|_1,\end{aligned} \tag{15}$$

where, $\phi_P$ represents features extracted by VGG-19, pretrained on ImageNet.

5) Identity Loss: The identity loss $\mathcal{L}_I$ is responsible for preserving identity-specific features during the image reconstruction phase and, therefore, encourages the translated image to preserve the identity content of the input image. $\mathcal{L}_I$ is defined as follows:

$$\mathcal{L}_I = \underset{x_{vis}^{rec};x_{vis}\sim p_{\mathcal{V}}}{\mathbb{E}} \left\| \phi_I(x_{vis}^{rec}) - \phi_I(x_{vis}) \right\|_1$$
$$+ \underset{x_{thm}^{rec};x_{thm}\sim p_{\mathcal{T}}}{\mathbb{E}} \left\| \phi_I(x_{thm}^{rec}) - \phi_I(x_{thm}) \right\|_1 \,, \qquad (16)$$

where, $\phi_I$ denotes the features extracted from the VGG-19 network pre-trained on the large-scale VGGFace2 dataset.

6) Semantic Loss: The semantic loss $\mathcal{L}_S$ guides the texture synthesis from thermal to visible domain and imparts attention to specific facial details. A parsing network (see at https://github.com/zllrunning/face-parsing.PyTorch) is used to detect semantic labels and to classify them into 19 different classes which correspond to the segmentation mask of facial attributes provided by CelebAMask-HQ as introduced by C.-H. Lee, Z. Liu, L. Wu, and P. Luo. Maskgan in "Towards diverse and interactive facial image manipulation" in IEEE Conference on Computer Vision and Pattern Recognition, 2020, face parsing is applied to images in the datasets.. $\mathcal{L}_S$ is defined as follows.

$$\mathcal{L}_S = \underset{x_{vis}^{fake};x_{vis}\sim p_{\mathcal{V}}}{\mathbb{E}} \left\| \phi_S(x_{vis}^{fake}) - \phi_S(x_{vis}) \right\|_1$$
$$\underset{x_{thm}^{fake};x_{thm}\sim p_{\mathcal{T}}}{\mathbb{E}} \left\| \phi_S(x_{thm}^{fake}) - \phi_S(x_{thm}) \right\|_1, \qquad (17)$$

where, $\phi_S$ is the parsing network, providing corresponding parsing class label.

Total loss: The overall loss function for the present method is denoted as follows:

$$\underset{E_{\mathcal{V}},E_{\mathcal{T}},G_{\mathcal{V}},G_{\mathcal{T}}}{\min} \underset{\mathbf{Dis}}{\max} \mathcal{L}(E_{\mathcal{V}},E_{\mathcal{T}},G_{\mathcal{V}},G_{\mathcal{T}},\mathbf{Dis}) =$$
$$\lambda_{GAN}\mathcal{L}_{GAN} + \lambda_{rec}\mathcal{L}_{rec} + \lambda_{cond}\mathcal{L}_{cond} + \lambda_P\mathcal{L}_P + \lambda_I\mathcal{L}_I + \lambda_S\mathcal{L}_S \qquad (18)$$

An embodiment of the invention is based on the following implementation details. The framework of the method is implemented in Pytorch by adapting the mentioned MUNIT package (see: https://github.com/nvlabs/MUNIT) and designing the architecture for the modality-translation task. It is noted that the implementation omits their proposed domain-invariant perceptual loss as well as the style-augmented cycle consistency. The model is trained until convergence. The initial learning rate for Adam optimization is 0.0001 with $\beta_1 = 0{:}5$ and $\beta_2 = 0{:}999$. For all experiments of the exemplified embodiment, the batch size is set to 1 and, based on empirical analysis, the loss weights are set to $\lambda_{GAN} = 1$, $\lambda_{rec} = 10$, $\lambda_{cond} = 35$, $\lambda_P = 15$, $\lambda_I = 20$ and $\lambda_S = 10$.

The experimental results are as follows:

A) Dataset and Protocol

1) ARL-MMFD Dataset:
The ARL-MultiModal Face dataset as published by S. Hu, N. J. Short, B. S. Riggan, C. Gordon, K. P. Gurton, M. Thielke, P. Gurram, and A. L. Chan "A polarimetric thermal database for face recognition research" in IEEE Conference on Computer Vision and Pattern Recognition Workshops, 2016, in short (ARL-MMFD), contains visible, LWIR, and polarimetric face images of over 60 subjects and includes variations in both expression and standoff distances. The experiments only uses visible and LWIR (i.e., thermal) images at one particular standoff distance: 2.5m. The first 30 subjects are used for testing and evaluation, and the remaining 30 subjects are used for training. The images in this dataset are already aligned and cropped.

2) ARL-VTF dataset: The ARL-Visible Thermal Face dataset as published by D. Poster, M. Thielke, R. Nguyen, S. Rajaraman, X. Di, C. N. Fondje, V. M. Patel, N. J. Short, B. S. Riggan, N. M. Nasrabadi, and S. Hu in "A large-scale, time-synchronized visible and thermal face dataset" in IEEE Winter Conference on Applications of Computer Vision, pages 1559-1568, 2021. (ARL-VTF) represents the largest collection of paired visible and thermal face images acquired in a time synchronized manner. It contains data from 395 subjects with over 500,000 images captured with variations in expression, pose, and eyewear. The established evaluation protocol is followed, which assigns 295 subjects for training and 100 subjects for testing and evaluation. The baseline gallery was selected and subjects without glasses, named G VB0-and P TB0-, respectively, was probed. Furthermore, the images based on the provided eyes, nose and mouth landmarks were aligned and processed.

B. Face recognition Performance

1) Face recognition Matcher: The ArcFace matcher published by J. Deng, J. Guo, N. Xue, and S. Zafeiriou in "Arcface: Additive angular margin loss for deep face recognition" in IEEE Conference on Computer Vision and Pattern Recognition, pages 4690-4699, 2019 was trained on normalized face images of size 112_112 from the MS-Celeb-1M dataset published by Y. Guo, L. Zhang, Y. Hu, X. He, and J. Gao in "Ms-celeb-1m: A dataset and benchmark for large-scale face recognition" in European Conference on Computer Vision, 2016 with additive angular margin loss. ResNet-50 was used as the embedding network and the final embedded feature size was set to 512. $l_2$ normalization was applied to the extracted feature vectors (embeddings), prior to the computation of cosine distance (match) scores.

2) Evaluation on Datasets: The method according to the invention aims to decompose the latent space. However, MUNIT, that serves as the basis for the method, performs image translation in an unsupervised manner and cannot be employed in the present thermal-to-visible scenario, as facial identity would not be preserved. Therefore, a loss function $\mathcal{L}_{cond}$, especially shown as in Equation (14) is incorporated as a conditional constraint forcing latent reconstruction (Equation (6)) with a normal noise distribution. Thus, the MUNIT-like supervised-approach, denoted as $\mathcal{L}_{base}$, will serve as a reference baseline model in the study.

Face verification experiments are conducted on the above mentioned ARLMMFD and ARL-VTF datasets. Area Under the Curve (AUC) and Equal Error Rate (EER) metrics are computed using the ArcFace matcher. Table I reports face verification results on the ARL-MMFD and ARL-VTF datasets. A higher AUC indicates better performance, whereas a lower EER is better. It is observed that translating thermal face images into visible-like face images significantly boosts the verification performance. For example, the direct comparison approach, in which a thermal probe is directly compared to the visible gallery, is related to the lowest AUC and highest EER scores, viz., 73:71%AUC and 32:73%EER in ARL-MMFD, and 54:80%AUC and 46:36%EER in ARL-VTF. When the $\mathcal{L}_{base}$ is applied from the baseline approach, and the adversarial $\mathcal{L}_{GAN}$ (Equation (9)), bi-directional reconstruction $\mathcal{L}_{rec}$ (Equation (13)) and conditional $\mathcal{L}_{cond}$ (Equation (14)) loss functions are incorporated, the performance improves to 79:33%AUC and 29:16%EER on ARL-MMFD, and 92:21%AUC and 15:88%EER on ARL-VTF. This confirms that image-to-image translation significantly reduces the modality gap. The proposed method when in includes $\mathcal{L}_{P+I+S}$ (Equation (18)), built on the basis of $\mathcal{L}_{base}$, that is improved by adding the perceptual $\mathcal{L}_P$ (Equation (15)), identity $\mathcal{L}_I$ (Equation (16)) and semantic $\mathcal{L}_S$ (Equation (17)) loss functions, exhibits the best performance of 93:99%AUC and 13:02%EER on ARL-MMFD, and 94:26%AUC and 12:99%EER on ARLVTF.

In optimizing LG-GAN on the large-scale dataset ARL-VTF, the hyper-parameters (weights) are tuned, thereby enabling objective functions to be combined in an effective manner. $\lambda_{rec} = 20$ is set, placing emphasis on both image reconstruction $\mathcal{L}_{rec}^{image}$ (Equation (10)) and identity code reconstruction $\mathcal{L}_{rec}^{identity}$ (Equation (11)). On the other hand, $\lambda_I = 10$ is increased towards improving the face verification accuracy to 96:96%AUC and 5:94%EER.

Table 1

| | ARL-MMFD Dataset [8] | | | ARL-VTF Dataset [15] $\mathcal{L}_{base}$ $\mathcal{L}_P$ $\mathcal{L}_I$ | | |
|---|---|---|---|---|---|---|
| | AUC (%) | EER (%) | SSIM | AUC (%) | EER (%) | SSIM |
| *Direct comparison* | 73.71 | 32.73 | 0.2899 | 54.80 | 46.31 | 0.3739 |
| | 79.33 | 29.16 | 0.4409 | 92.21 | 15.88 | 0.6049 |
| | 86.99 | 21.09 | 0.4596 | 92.79 | 14.24 | 0.6129 |
| | 84.20 | 22.90 | 0.4549 | 92.98 | 13.01 | 0.6101 |
| $\mathcal{L}_{P+I}$ | 87.63 | 19.40 | 0.4626 | 92.15 | 15.36 | 0.6136 |
| $\mathcal{L}_{P+I+S} = LG\text{-}GAN$ | **93.99** | **13.02** | **0.4652** | 94.26 | 12.99 | 0.6145 |
| | | | | | | |
| *LG-GAN optimized* | | | | **96.96** | **5.94** | **0.6787** |

C. Ablation study

To illustrate the impact of loss functions included in the present method on visual quality, an ablation study is conducted using both ARL-MMFD and ARL-VTF datasets. The quality of generated images is evaluated by the structural similarity index measure (SSIM) introduced by Z. Wang, A. C. Bovik, H. R. Sheikh, and E. P. Simoncelli in "Image quality assessment: from error visibility to structural similarity" in IEEE Transactions on Image Processing, pages 600-612, 2004, where an SSIM score of 1 is the extreme case of comparing identical images. Table I reports average SSIM scores computed on both datasets under different experimental configurations.

The first intuitive observation has to do with the low performance of direct matching between thermal and visible face images that can be explained in terms of the lower SSIM of 0:2899 and 0:3739, respectively, on the ARLMMFD and ARL-VTF datasets. This illustrates once more the modality gap. In an attempt to overcome this modality gap, the first baseline experiment $\mathcal{L}_{base}$, without visual quality optimization, boosts the SSIM score to 0:4409 and 0:6049, respectively. However, it is noted that generated results are rather blurry. By adding additional loss functions to $\mathcal{L}_{base}$, $\mathcal{L}_P$ (Equation (15)) and $\mathcal{L}_I$ (Equation (16)), namely the perceptual and identity losses, the SSIM score only marginally increases. Jointly, $\mathcal{L}_{P+I}$ improves the SSIM score further. Finally, the method including all loss functions, mentioned as LG-GAN is able to generate more realistic images with less artefacts, and with higher similarity to the visible ground-truth images. The resulting SSIM scores are 0:4652 and 0:6145, respectively. When LG-GAN is optimized on the large scale VTF dataset, a SSIM score of 0.6787 is observed.

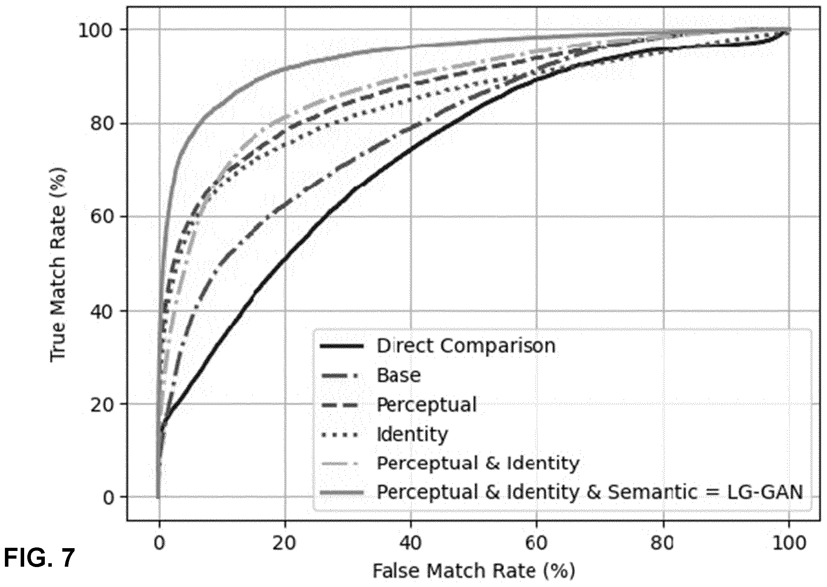

Besides the impact of individual and combined loss functions on the visual quality of images, their related impact on the face verification performance is shown with. Fig. 7 and

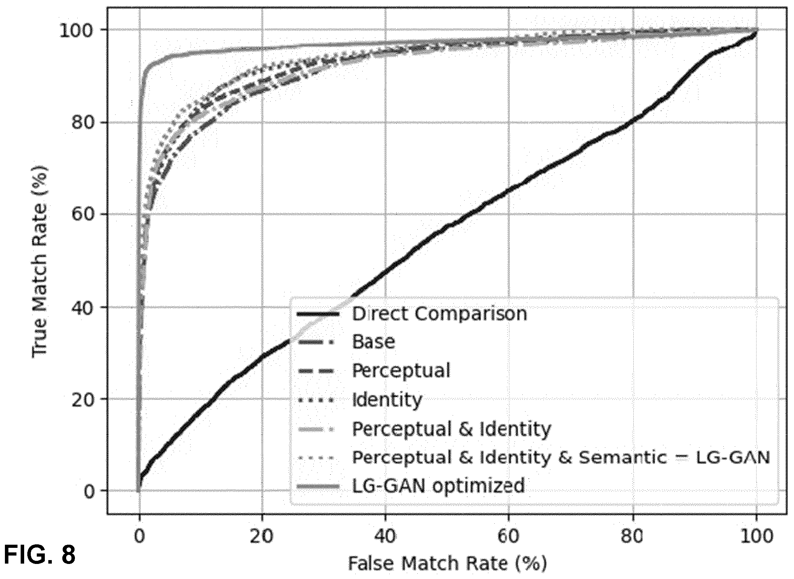

Fig. 8 depict ROC curves pertaining to different loss functions for the ARL-MMFD and ARL-VTF datasets, respectively. These clearly show a correlation between SSIM scores and CFR matching performance.

D. Latent code visualization

Understanding the latent code is critical for the present method, as it aims to elicit identity-specific information while ignoring spectrum induced information. A disentangled latent space is produced using an identity encoder and a style encoder that decomposes the input image into an identity code and a style code. As discussed earlier, the style code represents the spectral information and drives the domain translation, without adversely affecting the identity information. However, here is explored whether identity is explicitly encoded in the latent space. Towards this goal, the

identity code, $id_m$, is directly visualized after the encoding step $E_{\mathcal{M}}(x_m)$. This is realized for the visual image 10V as well as for the thermal image 10T. Then, by up-scaling the code to the target image size, the pertinent pixels are determined that are responsible for the identity information in the latent space, once for the visual identity code 410V' and once for the thermal identity code 410T'. This is visualized in Fig. 5. It is observed that facial features around eyes, nose, mouth and hair have been encoded, shown as lighter. Parts of the image

Moreover, identity codes - $id_{vis}$ and $id_{thm}$ - extracted from both spectra also highlight the same visual information.

The method comprises a latent-guided generative adversarial network (LG-GAN) that explicitly decomposes an input image into an identity code and a style code. The identity code is learned to encode spectral-invariant identity features between thermal and visible image domains in a supervised setting. In addition, the identity code offers useful insights in explaining salient facial structures that are essential to the synthesis of high-fidelity visible spectrum face images. Experiments on two datasets suggest that the present method achieves competitive thermal-to-visible cross-spectral face recognition accuracy, while enabling explanations on salient features used for thermal-to-visible image translation.

LIST OF REFERENCE SIGNS

| | | | |
|---|---|---|---|
| 10 | gallery images | 230 | FC |
| 10' | image identified | 300 | decoder |
| 10T | thermal image | 300T | decoder thm |
| 10TF | thermal image fake | 300V | decoder vis |
| 10TR | thermal image recreated | 310 | up sampling |
| 10TT | thermal image target | 320 | residual blocks |
| 10V | visual image | 330 | AdaIN parameters |
| 10VF | visual image fake | 340 | MLP |
| 10VR | visual image recreated | 400 | latent space |
| 10VT | visual image target | 400MT | latent space mixed thm |
| 20C | loss function | 400MV | latent space mixed vis |
| 20IR | loss function | 400RT | latent space recreated thm |
| 20P | loss function | 400RV | latent space recreated vis |
| 20PS | loss function | 400T | latent space thm |
| 20R | loss function | 400V | latent space vis |
| 30 | noise | 410 | identity code |
| 40 | starting image | 410T | identity code thm |
| 45 | cropped image | 410T' | identity thm features |
| 50V | discriminator vis | 410TR | identity code thm recreated |
| 50T | discriminator thm | 410V | identity code vis |
| 60 | transfer function | 410V' | identity vis features |
| 100 | identity encoder | 410VR | identity code vis recreated |
| 100T | identity encoder thm | 410VT | common identity code |
| 100V | identity encoder vis | 415 | high pixel relevance |
| 110 | down sampling | 420 | style code |
| 120 | residual blocks | 420T | style code thm |
| 200 | style encoder | 420TN | style code thm noise |
| 200T | style encoder thm | 420TR | style code thm recreated |
| 200V | style encoder vis | 420V | style code vis |
| 210 | down sampling | 420VN | style code vis noise |
| 220 | global pooling | 420VR | style code vis recreated |

**Claims**

1. A cross-spectral face recognition training method, **characterized in that** it includes:

   a spectrally separated learning submethod comprising the steps of:

acquiring a visible light face image set comprising a number of visual images and an infrared face image set comprising a number of thermal images, both sets related to the identical group of persons ,

decomposing each visual or thermal image of the visual or thermal image set into a visual or thermal identity code and into a visual or thermal style code, respectively,

decoding the visual identity code together with the visual style code generating a recreated visual image, and decoding the thermal identity code together with the thermal style code generating a recreated thermal image,

wherein an identity loss function as well as a recreated image loss function is connecting the recreated visual image and the recreated thermal image with the associated visible light face image and associated thermal image,

a first cross-spectral learning submethod for each of the visual target images comprising the steps of:

providing a noise source and combining it with the visual style code creating a noise modified visual style code based on a loss function providing a condition on the spectral distribution,

using this noise modified visual style code together with the thermal identity code as input for the visual decoder to create a simulated visual image,

coding a recreated visual style code and a recreated thermal identity code by coding the simulated visual image with the style encoder and identity encoder, respectively,

wherein the recreated image loss function is applied on the recreated visual style code feeding back onto the noise modified visual style code as well as on the recreated thermal identity code feeding back on the thermal identity code,

wherein the simulated visual image is compared with a target visual image in a visual discriminator for match or non-match,

a second cross-spectral learning submethod for each of the thermal target images comprising the steps of:

providing a noise source and combining it with the thermal style code creating a noise modified thermal style code based on a loss function providing a condition on the spectral distribution,

using this noise modified thermal code together with the visual identity code as input for the thermal decoder to create a simulated thermal image,

coding a recreated thermal style code and a recreated visual identity code by coding the simulated thermal image with the style encoder and identity encoder, respectively,

wherein the recreated image loss function is applied on the recreated thermal style code feeding back onto the noise modified thermal style code as well as on the recreated visual identity code feeding back on the thermal identity code,

wherein the simulated thermal image is compared with a target thermal image in a thermal discriminator for match or non-match.

2. A cross-spectral face recognition method, comprising an image set of visual images which have undergone the training method of claim 1, and a thermal image of the face of a person of interest, wherein the thermal image is encoded with a style encoder and identity encoder generating the latent space elements of the thermal style code and thermal identity code, wherein based on the visual style code combined with noise, the visual noisy style code is used together with the thermal identity code as entry values for the visual encoder generating a simulated visual image, which simulated visual image is then compared against the set of visual images to identify the presence of a visual image of the person of interest and providing a match.

3. A cross-spectral face recognition method, comprising an image set of thermal images which have undergone the training method of claim 1, and a visual image of the face of a person of interest, wherein the visual image is encoded with a style encoder and identity encoder generating the latent space elements of the visual style code and visual identity code, wherein based on the thermal style code combined with noise, the thermal noisy style code is used together with the visual identity code as entry values for the thermal encoder generating a simulated thermal image, which simulated thermal image is then compared against the set of thermal images to identify the presence of a thermal image of the person of interest and providing a match.

FIG. 1

FIG. 2

FIG. 3

FIG. 4

$x_{vis}$
10V

$id_{vis}$
410V'

$id_{thm}$
410T'

$x_{thm}$
10T

Pixel activation

LOW                                    HIGH

415

**FIG. 5**

**FIG. 6**

FIG. 7

FIG. 8

| | Europäisches Patentamt |
| European Patent Office |
| Office européen des brevets |

# EUROPEAN SEARCH REPORT

**Application Number**

EP 21 30 6772

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WU HAOXUE ET AL: "Exemplar Guided Cross-Spectral Face Hallucination via Mutual Information Disentanglement", 2020 25TH INTERNATIONAL CONFERENCE ON PATTERN RECOGNITION (ICPR), IEEE, 10 January 2021 (2021-01-10), pages 4206-4212, XP033909438, DOI: 10.1109/ICPR48806.2021.9412141 [retrieved on 2021-04-22] * Section III; figure 3 * * Section IV.D * | 1-3 | INV. G06V40/70 G06V10/82 G06V40/16 |
| T | DAVID ANGHELONE ET AL: "Beyond the Visible: A Survey on Cross-spectral Face Recognition", ARXIV.ORG, CORNELL UNIVERSITY LIBRARY, 201 OLIN LIBRARY CORNELL UNIVERSITY ITHACA, NY 14853, 12 January 2022 (2022-01-12), XP091138229, * Section 7.2 * | 1-3 | |
| T | ANGHELONE DAVID ET AL: "Explainable Thermal to Visible Face Recognition Using Latent-Guided Generative Adversarial Network", 2021 16TH IEEE INTERNATIONAL CONFERENCE ON AUTOMATIC FACE AND GESTURE RECOGNITION (FG 2021), IEEE, 15 December 2021 (2021-12-15), pages 1-8, XP034000393, DOI: 10.1109/FG52635.2021.9667018 [retrieved on 2021-12-30] * Section III; figure 1 * | 1-3 | TECHNICAL FIELDS SEARCHED (IPC) G06V |

-/--

The present search report has been drawn up for all claims

| Place of search | Date of completion of the search | Examiner |
|---|---|---|
| The Hague | 19 May 2022 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EUROPEAN SEARCH REPORT**

Application Number

EP 21 30 6772

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Cao Zhicheng ET AL: "A Bidirectional Conversion Network for Cross-Spectral Face Recognition", , 3 May 2022 (2022-05-03), XP055923060, Retrieved from the Internet: URL:https://arxiv.org/ftp/arxiv/papers/2205/2205.01595.pdf [retrieved on 2022-05-19] * Section 2; figure 1 * | 1-3 | |

TECHNICAL FIELDS
SEARCHED       (IPC)

The present search report has been drawn up for all claims

| Place of search | Date of completion of the search | Examiner |
|---|---|---|
| The Hague | 19 May 2022 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHANG et al.** Tv-gan: Generative adversarial network based thermal to visible face recognition. *International Conference on Biometrics,* 2018, 174-181
- **CHEN et al.** Matching thermal to visible face images using a semantic-guided generative adversarial network. *IEEE International Conference on Automatic Face & Gesture Recognition,* 2019, 1-8
- **DI et al.** Multi-scale thermal to visible face verification via attribute guided synthesis. *IEEE Transactions on Biometrics, Behavior, and Identity Science,* 2021, vol. 3 (2), 266-280
- **WANG et al.** Thermal to visible facial image translation using generative adversarial networks. *IEEE Signal Processing Letters,* 2018, vol. 25 (8), 1161-1165
- **IRANMANESH et al.** Coupled generative adversarial network for heterogeneous face recognition. *Image and Vision Computing,* 2020, vol. 94, 103861
- **KEZEBOU et al.** TR-GAN:thermal to RGB face synthesis with generative adversarial network for cross-modal face recognition. *Mobile Multimedia/Image Processing, Security, and Applications,* 2020, vol. 11399, 158-168
- **DI et al.** Polarimetric thermal to visible face verification via self-attention guided synthesis. *International Conference on Biometrics,* 2019, 1-8
- **X. HUANG et al.** Multimodal unsupervised image-to-image translation. *European Conference on Computer Vision,* 2018

- **O.M. PARKHI ; A-VEDALDI ; A.ZISSERMAN.** *Deep face recognition,* 2015
- **C.-H. LEE ; Z. LIU ; L. WU ; P. LUO.** Towards diverse and interactive facial image manipulation. *IEEE Conference on Computer Vision and Pattern Recognition,* 2020
- **S. HU ; N. J. SHORT ; B. S. RIGGAN ; C. GORDON ; K. P. GURTON ; M. THIELKE ; P. GURRAM ; A. L. CHAN.** A polarimetric thermal database for face recognition research. *IEEE Conference on Computer Vision and Pattern Recognition Workshops,* 2016
- **D. POSTER ; M. THIELKE ; R. NGUYEN ; S. RAJARAMAN ; X. DI ; C. N. FONDJE ; V. M. PATEL ; N. J. SHORT ; B. S. RIGGAN ; N. M. NASRABADI.** A large-scale, time-synchronized visible and thermal face dataset. *IEEE Winter Conference on Applications of Computer Vision,* 2021, 1559-1568
- **J. DENG ; J. GUO ; N. XUE ; S. ZAFEIRIOU.** Arcface: Additive angular margin loss for deep face recognition. *IEEE Conference on Computer Vision and Pattern Recognition,* 2019, 4690-4699
- **Y. GUO ; L. ZHANG ; Y. HU ; X. HE ; J. GAO.** Ms-celeb-1m: A dataset and benchmark for large-scale face recognition. *European Conference on Computer Vision,* 2016
- **Z. WANG ; A. C. BOVIK ; H. R. SHEIKH ; E. P. SIMONCELLI.** Image quality assessment: from error visibility to structural similarity. *IEEE Transactions on Image Processing,* 2004, 600-612